# EUROPEAN PATENT SPECIFICATION

(11) **EP 1 443 218 B1**
(45) Date of publication and mention of the grant of the patent: **03.01.2007**
(21) Application number: 04009658.8
(22) Date of filing: 18.10.1999
(51) Int. Cl.: F15B 15/28, G05D 5/02

(54) **Precision sensor for a hydraulic cylinder**
Präzisionssensor eines hydraulischen Stellgliedes
Capteur de haute précision pour un vérin hydraulique

(30) Priority: 20.10.1998 US 104886 P; 30.04.1999 US 302701
(43) Date of publication of application: 04.08.2004
(62) Divisional of application: 99970715.1
(73) Proprietor: Control Products Inc., East Hanover, NJ 07936 (US)
(72) Inventor: Glasson, Richard O., Whippany New Jersey 07981 (US)
(74) Representative: Arends, William Gerrit

(56) References cited:
- EP-A- 0 325 787
- EP-A- 0 505 297
- DE-A- 2 635 614
- DE-A- 3 835 782
- US-A- 4 121 504
- US-A- 4 288 196

## Description

### FIELD OF THE INVENTION

The invention generally relates to position sensors, and more particularly to linear position sensors for use on power cylinders.

### BACKGROUND

Equipment implementing hydraulic cylinders for mechanical movement, such as excavators and other heavy construction equipment, depend upon operators to manually control the moveable elements of the equipment. The operator must manually move control levers to open and close hydraulic valves that direct pressurized fluid to hydraulic cylinders. For example, when the operator lifts a lift arm, the operator actually moves a lever associated with the lift arm, causing a valve to release pressurized fluid to the lift arm cylinder. The use of levers to control hydraulic equipment depends upon manual dexterity and requires great skill. Improperly operated equipment poses a safety hazard, and operators have been known to damage overhead utility wires, underground wiring, water mains, and underground gas lines through faulty operation of excavators, bucket loaders or like equipment.

In addition to the safety hazards caused by improperly operated equipment, the machine's operating efficiency is also a function of the operator's skill. An inexperienced or unskilled operator typically fails to achieve the optimum performance levels of the equipment. For instance, the operator may not consistently apply the force necessary for peak performance due to a concern over striking a hazard. Efficiency is also compromised when the operator fails to drive a cylinder smoothly. The operator alternately overdrives or underdrives the cylinder, resulting in abrupt starts and stops of the moveable element and thereby derating system performance. As a result, the skill level necessary to properly and safely operate heavy equipment is typically imparted through long and costly training courses and apprenticeships.

There have been various attempts at implementing an automated control system for use on heavy equipment. One such system is disclosed in U.S. Patent No. 4,288,196. The system described therein provides for a computer programmable system for setting the lowermost point of a backhoe bucket. In U.S. Patent No. 4,945,221, a control system for an excavator is disclosed. The system attempts to control the position of the bucket cutting edge to a desired depth. Another position locating system for heavy equipment is disclosed in U.S. Patent No. 5,404,661.

US Patent No. 4,121,504, which corresponds to the preamble of claim 1, discloses a linear positioning cylinder drive having a piston connected at one end to a load and the other end to a cable. The cable is secured to a pulley secured to a shaft urged in a take up direction by a coil spring or hydraulic motor. The piston is moved by a hydraulic pump through a servo valve actuated by a circuit controlled by a transducer driven by the shaft. In one embodiment, the transducer is rotary and in another embodiment the transducer is linear.

These systems and others like them share a common feature in that they implement a position sensor. Typically, these sensors are rotary potentiometers as, for instance, suggested in Murakmi, Kato and Ota, *Precision Angle Sensor Unit for Construction Machinery,* SAE Technical Paper Series 972782, 1997. This sensor relies upon a potentiometer which changes a voltage or current in relation to the position of a bucket or boom. Other types of sensors rely upon optical, conductive plastic, or metal-in-glass technologies.

It is a disadvantage of these sensors that they mount to the outside of the machinery, thereby exposing them to the environment. In the case of heavy equipment, this environment includes severe temperatures, excessive moisture, and air-borne particulate matter which may infect the sensor. In the case of optical, conductive plastic and metal-in-glass technologies, the sensors would rapidly degrade if used on construction equipment. Furthermore, some of these sensors use contacting components that are susceptible to wear, vibration and temperature. As a result, no sensor mountable to the outside of heavy equipment or relying upon contacting elements has gained widespread use in the industry.

There have been attempts to overcome the limitations of contacting sensors by using electromagnetic energy. For example, the system disclosed in U.S. Patent No. 4,945,221 discloses using lasers for sensing position. Others suggest using RF energy or the like to provide a feedback signal. These systems, however, have not replaced the less expensive potentiometers due to their complexity of use and their expense.

As the demands placed upon actuated machinery increases, so does the demand for a low cost, long-life sensor operable in a harsh environment. Despite the development of highly sophisticated control systems, computer processors and application specific software, the implementation of this technology in electrohydraulic equipment has been curtailed by the failure to provide a long-life, cost-effective precision sensor operable in harsh environments.

### SUMMARY OF THE INVENTION

A sensor according to the principles of the invention provides a precision signal utilizing a non-contacting transducer. In an exemplary embodiment, the sensor mounts inside a hydraulic cylinder, away from the harsh environment, and provides a voltage or current signal indicative of the position of the piston. The sensor provides a connector, attached between a cylinder piston and a converting element, for sensing the displacement of the piston. The converting element converts the cylinder displacement to a proportional displacement of a translating member. A precision transducer senses the displacement of the translating member and provides an electrical output signal proportional to the piston movement or to the piston's position.

In one exemplary sensor according to the principles of the invention, a flexible connector such as a cable is attached to the movable element (a piston). The converting element comprises a pick-up spool coupled to the other end of the connector and rotatable about an axis. The spool is under tension from a recoil mechanism, such as a spring, coupled to the spool. A translating member, which can be a lead screw, engages threads on the interior of the spool, and translates along an axis when the spool rotates. A transducer is disposed to sense a position or motion of the translating member, and provides an output signal proportional to, and therefore indicative of, the position (or motion) of the translating member. The transducer can be a linear variable differential transformer (LVDT), which is a non-contacting transducer. Of course, other transducers, including those using contacting components, can be used.

For use in a hydraulic cylinder, the sensor's operation is like this. The converting element is attached to a cylinder end cap. As the cylinder piston moves within the cylinder, the spool feeds out or draws in cable, thereby tracking the piston's linear displacement. As the cylinder moves toward the spool, the spring causes the spool to wind the cable. When the cylinder moves away from the spool, the cylinder force overcomes the spring tension and pulls cable off the spool. The spool is in threaded engagement with a lead screw. As the spool rotates, the spool and lead screw convert the rotary motion of the spool to a linear displacement of the lead screw. The displacement is proportional to the piston displacement. The lead screw is attached to an LVDT core that moves within an LVDT body when the cylinder moves. The LVDT delivers an electrical signal at its output, which can be configured as a position signal, rate signal or the like.

### BRIEF DESCRIPTION OF THE DRAWINGS

A more complete understanding of the invention may be obtained from consideration of the following description in conjunction with the drawings in which:
FIG. 1 is a block diagram of an exemplary feedback control system for a hydraulic cylinder;
FIG. 2 shows a perspective of an exemplary cylinder according to the principles of the invention;
FIGs. 3A, B and C show an exemplary sensor according to the principles of the invention;
FIG. 4 shows another exemplary sensor according to the principles of the invention;
FIG. 5 shows another exemplary sensor according to the principles of the invention;
FIG. 6 shows another exemplary sensor according to the principles of the invention; and,
FIG. 7 shows another exemplary sensor according to the principles of the invention.

### DETAILED DESCRIPTION

A feedback sensor for a cylinder according to the principles of the invention provides a precision signal indicative of a piston position with relation to a cylinder. The sensor is durable, maintains a long life, and is configured for use in harsh environments. An exemplary sensor mounts inside a hydraulic cylinder, thereby protecting the sensor, and uses a non-contacting transducer to provide the precision signal. A converting element converts the motion of the piston to a proportional motion of a translating member. The transducer, which can be located remotely from the piston, senses the position of the translating member, and provides an electrical output signal indicating the piston's position. This signal can be conditioned and used in a feedback control system, a user interface, or any system where such a signal is desirable.

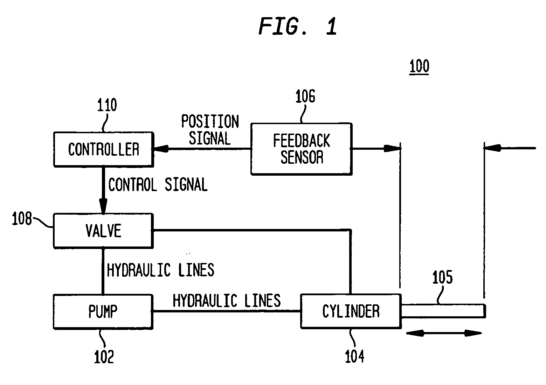

In FIG. 1, a block diagram of an exemplary feedback control system 100 is shown. The control system 100 comprises a hydraulic cylinder 104 actuated by a pump 102 and a valve 108. As is known in the art, the pump 102 delivers hydraulic fluid under pressure to the cylinder 104 which forces the piston 105 to move with respect to the cylinder. The valve 108 controls the flow of hydraulic fluid to the cylinder 104. To implement feedback control, a feedback sensor 106 senses the position of the piston 105 and delivers a position signal to a controller 110. The controller 110 actuates the valve 108 according to certain instructions. The piston 105 may be attached to some other apparatus (not shown) whereby a displacement of the piston causes a displacement of the apparatus. Although a hydraulic cylinder is shown, it should be apparent that other types of cylinders, such as pneumatic cylinders, can be used.

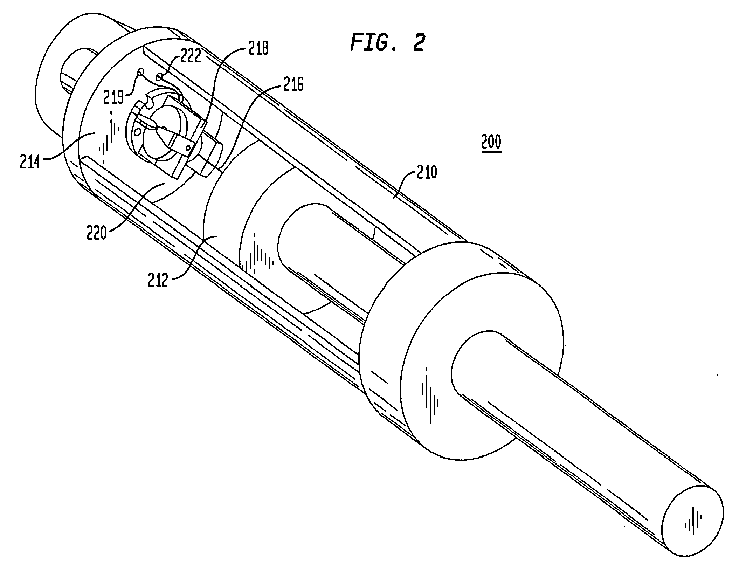

Referring to FIG. 2, a hydraulic cylinder 200 that can be used in the feedback control system 100 of FIG. 1 is shown. The hydraulic cylinder 200 comprises a cylinder enclosure 210 and a piston 212. The piston 212 is operable to translate in dependence upon hydraulic fluid pumped into the cylinder. The cylinder enclosure 210 further includes a base 214, and the piston 212 is a moveable element with respect to the base. A precision sensor 218 provides a position related signal across the terminals 219 and 222. For instance, the sensor delivers a signal across the sensor's terminals indicative of the position "d" in FIG. 2. A high pressure bulkhead connector (not shown) provides a mechanism for routing the terminals 219 and 222 to the outside of the cylinder enclosure 210. The sensor 218 further comprises a flexible connector 216 attached to the piston 212, a converting element 220 attached to the base 214 and a transducer (not shown). The connector 216 also attaches to the converting element 220 and directly imparts the displacement of the piston 212 with respect to the base 214 to the converting element 220. The converting element 220 converts this displacement to a proportional displacement of a translating member (not shown). The transducer, located remote from the piston, senses the position or motion of the translating member.

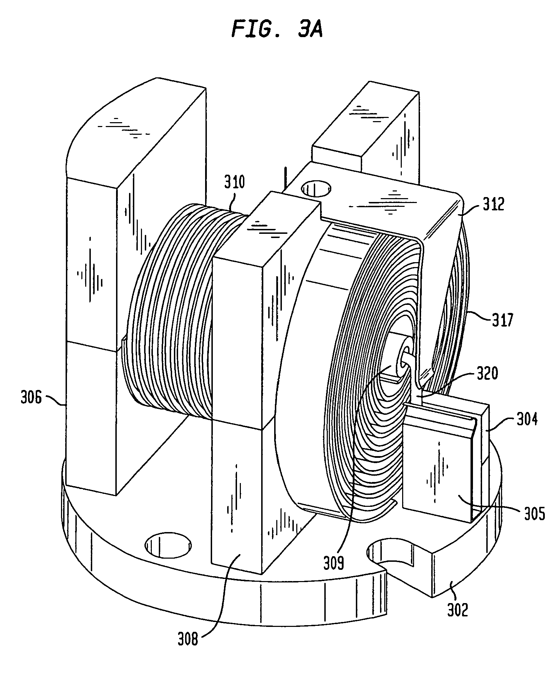

An exemplary embodiment of the converting element 220 is described with reference to FIGS. 3A, 3B and 3C. A first mounting element 302 is provided for attaching the converting element 220 to, for instance, the base of the hydraulic cylinder. A second mounting element 306 and a third mounting element 308 are fixedly attached to the first mounting element 302. The converting element 220 includes a rotating element 310 rotatably attached between the second mounting element 306 and the third mounting element 308. An anti-backlash spring 312 is mounted to the third mounting element 308. A block 304 and an anti-rotation spring 305 are attached to the first mounting element 302. An arm 320 attaches to a translating member 324 at one end and engages the block 304 at the other. A spring 317 for providing a rotary mechanism for the rotating element 310 is housed in a spring housing or spring mounting (not shown). The housing is attached to the first mounting element 302.

In FIGs. 3B and 3C an exploded view of the converting element 218 is shown. A press-in hub 316 having a shaft 309 with internal threads is rotatably attached to a bushing 321. The bushing is fixedly attached to the third mounting element 308. For ease of installation, the third mounting element can comprise an upper half 308A and a lower half 308B. The translating member 324, having threads formed thereon, engages the internal threads of the hub 316. The rotating element 310 defines an internal opening into which the hub is pressed so that it rotates as the rotating element 310 rotates. On a side opposite the hub 316, a bushing 322 fixedly mounts in the second mounting element 306 which can also comprise an upper half 306A and a lower half 306B. As shown in FIG. 3C, the brackets 306 and 308 define a circular opening for attaching the bushings 322 and 321, respectively. An axle 323 attaches to the bushing 322, and the rotating element 310 rotatably engages the bushing 322. In this exemplary embodiment, the transducer is a linear variable differential transformer (LVDT), which has a core and a body. The LVDT body acts as the axle 323. Alternatively, the LVDT body can be internal to a separate axle. The LVDT core 325 is attached to the translating member 324 and disposed to translate within the LVDT body.

Operation of this exemplary sensor is explained with reference to FIGs. 2, 3A, 3B and 3C. The flexible connector 216 attaches to the piston 212 which causes the rotating element 310 to rotate in a first direction when the piston 212 moves away from the cylinder base 214. When the piston travels toward the cylinder base 214, the spring 317 causes the rotating element 310 to rotate in a direction opposite to the rotation caused by the piston moving away from the base 214. In other words, the flexible connector winds around the rotating element 310 when the piston 212 moves toward the base 214, and unwinds from the rotating element 310 when the piston moves away from the base. The linear motion of the piston 212 converts to the angular motion of the rotating element 310 via the pulling action of the piston on the flexible connector and due to the rotational action of the spring 317.

As the rotating element 310 rotates, the hub 316 rotates with it. The hub's internal threads engage threads on the translating member 324. As the rotating element and hub rotate, the threaded engagement causes the translating member 324 to move linearly along the rotational axis of the rotating element 310. The thread arrangement is chosen such that the movement of the translating member is proportional to the movement of the piston. The threads can be acme, square, modified square, buttress, unified, ISO, ball bearing, extra-fine pitch or any other of various known threads. Likewise, the position of the translating member 324 with respect to the transducer is in a one-to-one correspondence with the position of the piston 212. The LVDT 323, 325 senses a position (or a movement) of the translating member and provides a position related signal.

The precision and performance of the sensor is enhanced by providing the previously set forth anti-rotation elements 320, 304 and 305 and anti-backlash elements 320 and 312. When the rotating element 310 rotates, causing the translating member 324 to translate along an axis, there is a small frictional force between the inner threads of the hub and the external threads formed on the translating member. This small frictional force is overcome before the translating member moves. To overcome this force, the arm 320 is provided at an end of the translating member 324. The arm 320 bends substantially perpendicular to a longitudinal axis of the translating member and engages the block 304. For purposes of illustration, the arm 320 is shown engaging the block in FIG. 3A such that, when the rotating element 310 rotates in a counterclockwise direction, the block inhibits the arm 320 from turning, thereby overcoming any frictional force arising from the threaded engagement.

The anti-rotation spring 305 applies a force to the arm such that it engages the block 304 at substantially all times. The force exerted by this spring is perpendicular to the longitudinal axis of the translating member 324 and is chosen such that it overcomes the frictional force caused by the threaded engagement when, with reference to FIG. 3A, the rotating element 310 rotates in a clockwise direction. It should be apparent that various other equivalent structures can be used to inhibit the motion of the arm 320 when the rotating element 310 rotates. For instance, instead of the spring 305, another block can be used. Thus, the arm 320 can be held between two blocks or a slot formed in one block. In any configuration, the anti-rotational forces upon the arm 320 are such that the arm translates when the rotating element 310 rotates.

In addition to the frictional force inherent in the threaded engagement, the tolerances of the threads can introduce a dead space between the threads. For example, when the translating member 324 changes direction, due to a change in the direction of motion of the piston 212, the piston can move some small distance before the threads engage. In other words, depending upon the thread tolerance, there may be play between the threads. This is overcome by the anti-backlash spring 312 attached to the bracket 308. The spring applies a force to the arm 320 directed along the translating member's longitudinal axis. This force holds the translating member in substantially constant threaded engagement with the internal threads of the hub 316. The force exerted by this spring is chosen such that the translating member may move against the spring when the piston displaces to cause such movement.

It should be apparent that various materials and configurations can be used to implement a sensor according to the principles of the invention. For instance, the rotating element 310 can be configured to enhance the performance of the sensor by forming grooves thereon so that the flexible connector 216 winds up along successive grooves of the rotating element 310. In this way, no portion of the flexible connector 216 lies over another portion. Alternatively, wind guides can be used, or for displacements of large magnitude relative to the storage capacity of the rotating element, the rotating element can be configured such that some portions of the flexible connector overlay other portions of the flexible connector.

Likewise, various materials can be used for the flexible connector. A connector made of Kevlar®, and materials like it, provide desirable attributes, including low stretch, tolerance to a hydraulic fluid environment, and stability over a wide range of temperature (low coefficient of thermal expansion). For example, Kevlar® is known to have a coefficient of thermal expansion on the order of -0.0000036/degree Celsius (-3.6 parts per million per degree Celsius (-.000002/degree Farenheit (-2 parts per million per degree Farenheit)). The connector can also comprise other types of cable, such as metallic cable, Nylon®, or stranded cable, and can be coated to provide longer life or to adjust the coefficient of friction. Its diameter can also be adjusted to meet storage needs on the rotating element or to decrease windage. Similarly, the connector can be affixed to the rotating element or moveable element by well-known methods, such as a clevis, pin, weld, bolt or screw, splice, adhesive, threaded terminal, swayed oval, eye, ball and socket, thimble, or a strap fork.

In the embodiment shown in FIGs. 2, 3A, 3B and 3C, the transducer is a linear variable differential transformer (LVDT). It should be apparent to those skilled in the art that other types of transducers can be implemented without departing from the principles of the invention, including differential variable reluctance transducers (DVRTs®), wire wound potentiometers, conductive plastic potentiometers, inductive or capacitive sensors, Hall-effect transducers, or sensors based upon light emitting diodes, or laser light. In each case, the target element for the transducer affixes to the translating member. The sensing element is disposed to sense the motion or position of the target element. Similarly, the rotational spring can be a spiral torsion spring, a volute spring, a constant force extension spring, a helical torsion spring, a twisted elastic element, a round tension or compression spring, a cantilever tension or compression spring or any other type of spring which may be usable to impart a rotational action on the rotating element. Likewise, the arm 320 can also be a pin or other similar structure for engaging the block 304 and the anti-backlash spring 312.

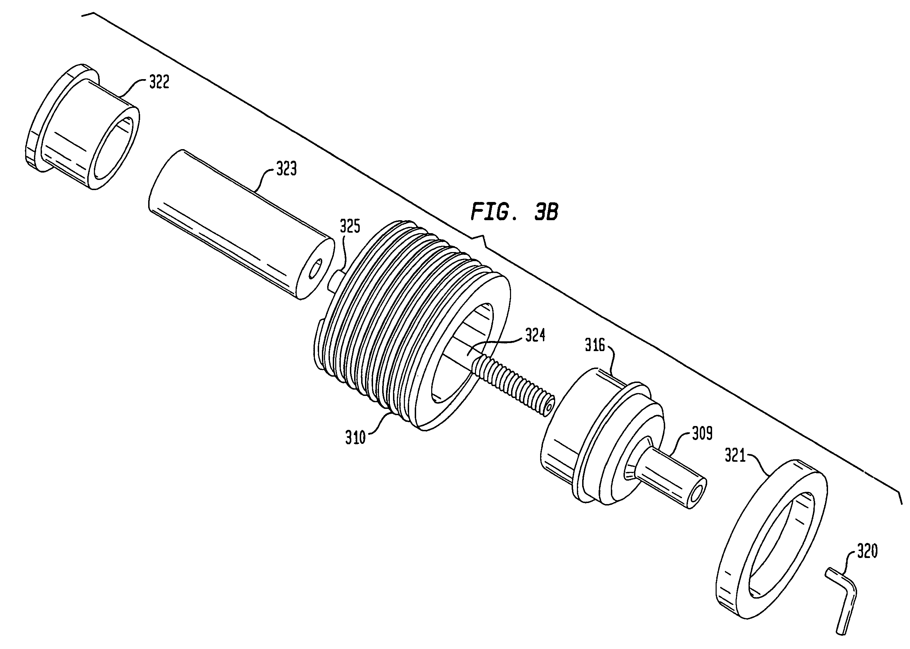

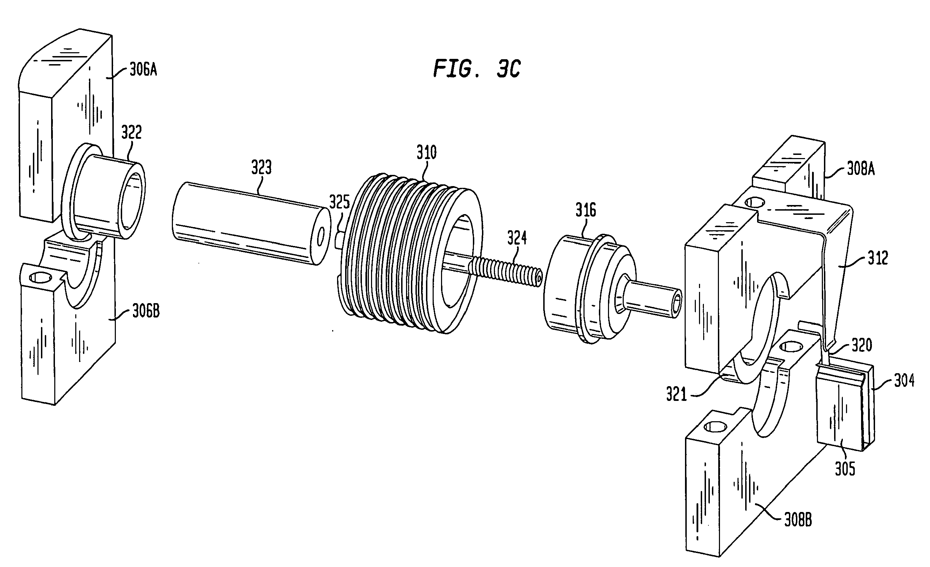

Another exemplary embodiment of a sensor according to the principles of the invention is shown in FIG. 4. In this embodiment, an LVDT core 424 is caused to translate along an axis substantially parallel to an axis of rotation for a rotating element 410. The flexible connector 420 affixes to the rotating element 410 and to a movable element (not shown). A lead screw 415 threadedly engages the rotating element 410 at one end. At another end, the lead screw is affixed to an arm 422. The LVDT core 424 affixes to the other end of the arm 422 and is disposed to translate in an LVDT body 426. When the flexible connector is pulled such that it unwinds from the rotating element 410, the threaded engagement causes the lead screw 415 to translate. This, in turn, causes the LVDT core 424 to translate within the LVDT body 426. A recoil mechanism 428 causes the rotating element 410 to wind the connector 420 when the moveable element (not shown) moves such that there is no tension on the connector 420. This also causes the LVDT core 424 to translate within the LVDT body 426. The LVDT thereby provides a position related signal for the movable element (not shown).

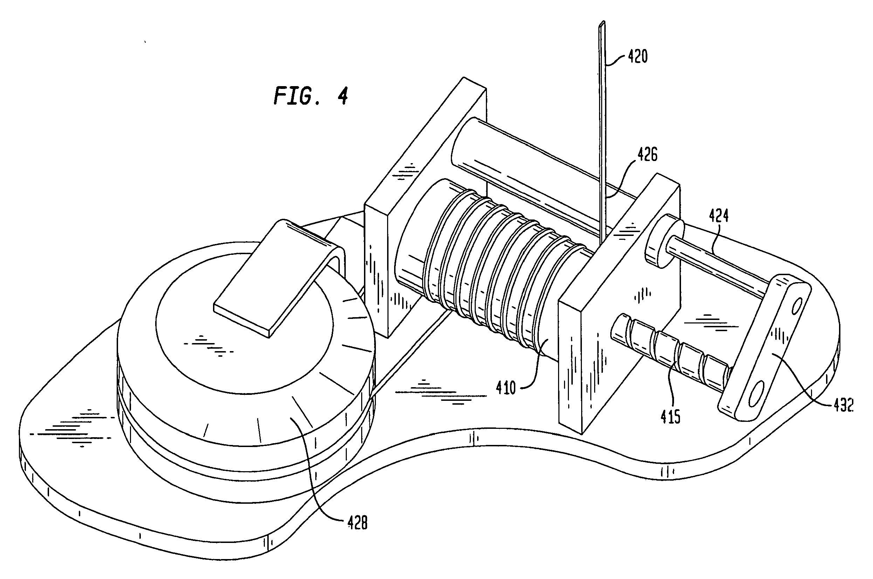

Of course, the sensor can also be affixed in various locations within a cylinder. For instance in FIG. 5, a sensor 500 is shown attached to the cylinder end cap 503 defining the piston shaft aperture. The flexible connector 502 is affixed to the same side of the piston as the shaft. Operation of this configuration is the same with respect to FIGs. 2, 3A, B, and C.

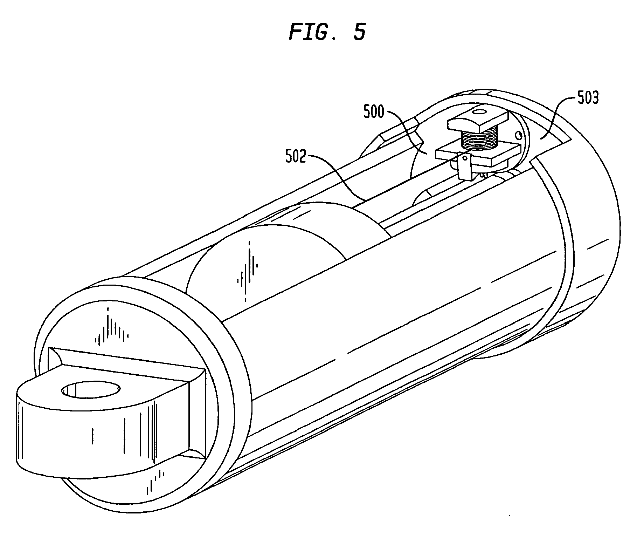

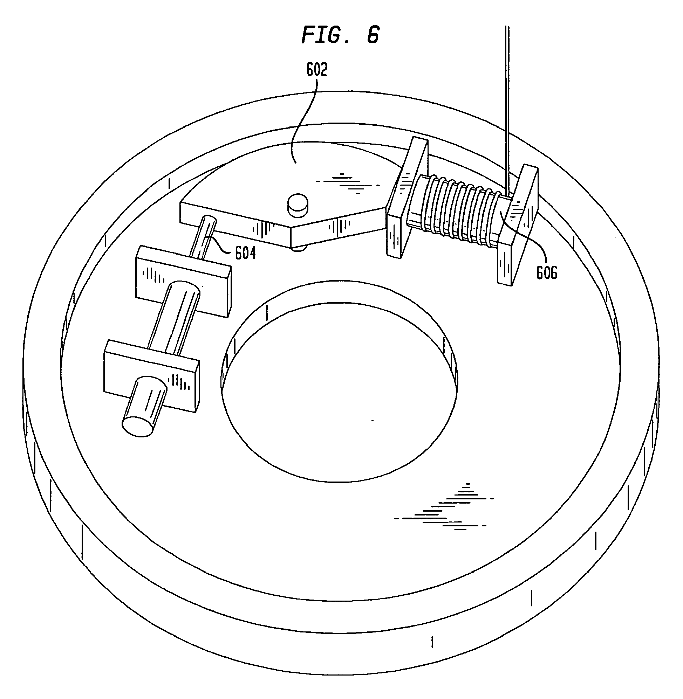

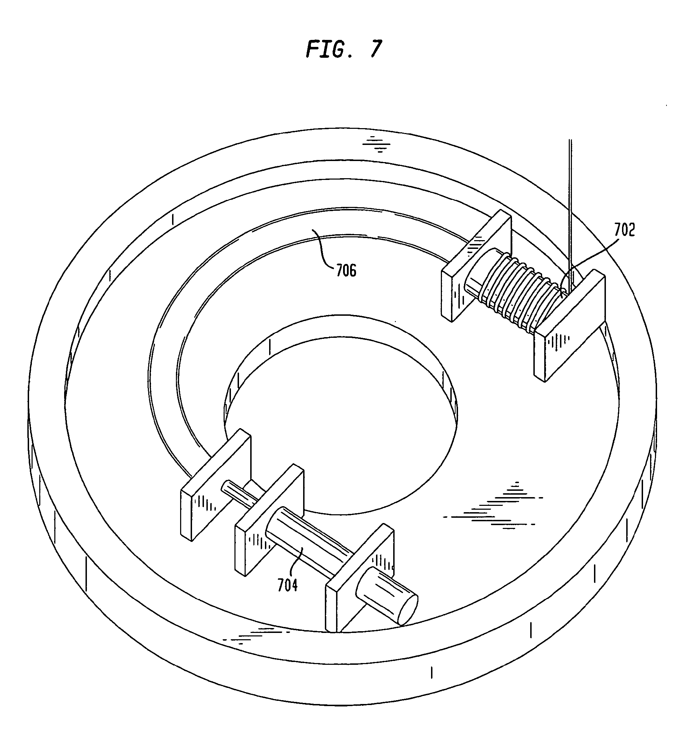

It should also be apparent that various mechanical connections can be made between the transducer and the converting element of the sensor. In FIG. 6, an actuated cam 602 is shown engaged with an LVDT core 604 and with the sensor's converting element 606. In FIG. 7, a mechanical connection between the converting element 702 and the transducer 704 is made via an extension cable 706.

Likewise, the converting element can be configured in various ways without departing from the principles of the invention. For instance, gears instead of threads can convert the linear displacement of the movable element to the linear displacement of the translating member. It should also be apparent that for applications with relatively large displacements of the movable element or where an obstruction is located between the converting element and the movable element, various pulleys, guides or blocks and tackle can be provided to route the connector from the movable element to the sensor's converting element

It is to be understood that the invention is not limited to the illustrated and described forms of the invention contained herein. It will be apparent to those skilled in the art that various changes may be made without departing from the scope of the invention and the invention is not considered limited to what is shown in the drawings and described in the specification.

## Claims

1. A sensor (218) for providing a position-related signal for a first element (212) in relation to a second element (214), the sensor comprising:
a flexible connector (216) having a first end attachable to the first element (212);
a rotating element (310) attachable to the second element (214) and coupled to a second end of the flexible connector (216); and
a transducer (323, 704),
**characterised in that** the sensor further comprises a translating member (324) cooperating with the rotating element (310); and
**in that** the transducer (323, 704) is disposed to sense a position of the translating member (324), wherein the transducer (323, 704) provides the position-related signal.

2. The sensor (218) of claim 1 further comprising a recoil mechanism (428) coupled to said rotating element (310) for imparting a rotational action on said rotating element (310).

3. The sensor (218) of claim 1 or 2 wherein the rotating element (310) defines an internal opening.

4. The sensor (218) of any one of the preceding claims wherein said translating member (324) is in threaded communication with said rotating element (310).

5. The sensor (218) of any one of the preceding claims wherein said translating member (324) displaces along an axis of rotation of said rotating element (310).

6. The sensor (218) of any one of the preceding claims wherein said transducer (323, 704) is one selected from the group comprising a LVDT, a DVRT®, a potentiometer, an inductive transducer, a capacitive transducer, a Hall-effect transducer, an LED transducer, and a laser based transducer.

7. The sensor (218) of claim 4 further including a mounting element (302) attached in fixed relation to the second element (214), said rotating element (310) rotatably attached to said mounting element (302)

8. The sensor (218) of any one of the preceding claims further including an anti-rotational force exerted on said translating member (324).

9. The sensor of any one of the preceding claims wherein the translating member (324) linearly displaces upon rotation of the rotating element (310).

10. The sensor (218) of any one of the preceding claims wherein the first element (212) is a piston and said second element (214) is a cylinder, said piston disposed to translate in said cylinder.

11. The sensor (218) of claim 10 wherein the sensor (218) is located within the cylinder.

12. The sensor (218) of claim 10 or 11 further comprising hydraulic fluid contained within said cylinder.

13. The sensor (218) of any one of the preceding claims further including an anti-backlash force exerted along a longitudinal axis of said translating member (324).

14. A piece of heavy equipment comprising a sensor according to claim 12.

15. A method for sensing a position of a first element (212) moveable within a cylinder (200), the steps comprising:
in a converting element (220) in fixed relation to the cylinder (200), converting a linear displacement of the first element (212) to a proportional linear displacement of a second element (324), and providing a transducer,
**characterised in that**:
the linear displacement of the first element (212) is converted to the proportional linear displacement of the second element (324) via a flexible connector (216) connected to the first element (212) and to the converting element (220);
the transducer (323, 325, 704) is disposed within the cylinder (200); and
the method further comprises the step of sensing the linear displacement of the second element (324) with the transducer (323, 325, 704).

16. The method of claim 15 wherein said converting step includes the steps of:
converting said linear displacement of the first element (212) to an angular displacement of a rotatable element (310); and,
converting said angular displacement of said rotatable element (310) to a linear displacement of said second element (324).

17. The method of claim 15 or 16 wherein said transducer (323, 325, 704) is one selected from the group comprising a LVDT, a DVRT®, a potentiometer, an inductive transducer, a capacitive transducer, a Hall-effect transducer, an LED based transducer, and a laser based transducer.

18. The method of any one of claims 15 to 17 wherein said transducer (323, 325, 704) is operable to provide a position related signal.

19. The method of any one of claims 15 to 18 further comprising disposing hydraulic fluid within said cylinder (200).

20. The sensor of claim 6 wherein the transducer comprises an LVDT.

21. The sensor of claim 6 wherein the transducer comprises a Hall-effect transducer.

22. The sensor of claim 3, the transducer being at least partially disposed within the internal opening.

23. The sensor of claim 1, the sensor comprising the first and second elements (212, 214), wherein:
the first end of the flexible connector (216) is attached to the first element (212);
the rotating element (310) is attached to the second element (214);
the translating member (324) is in dependence with said rotating element (310) and, wherein a displacement of the first element (212) causes a displacement of said translating member (324).

## Patentansprüche

1. Sensor (218) zur Bereitstellung eines positionsbezogenen Signals für ein erstes Element (212) in Bezug auf ein zweites Element (214), wobei der Sensor aufweist:
einen flexiblen Verbinder (216) mit einem ersten Ende, das am ersten Element (212) befestigt werden kann;
ein Drehelement (310), das am zweiten Element (214) befestigt werden kann und mit einem zweiten Ende des flexiblen Verbinders (216) gekoppelt werden kann; und
einen Meßwandler (323, 704),
**dadurch gekennzeichnet, daß**
der Sensor ferner ein Verschiebungsteil (324) aufweist, das mit dem Drehelement (310) zusammenwirkt; und
**dadurch** daß der Meßwandler (323, 704) angeordnet ist, eine Position des Verschiebungsteils (324) zu erfassen, wobei der Meßwandler (323, 704) das positionsbezogene Signal bereitstellt.

2. Sensor (218) nach Anspruch 1, ferner mit einem an das Drehelement (310) gekoppelten Rückstellmechanismus (428) zur Ausüben einer Drehwirkung auf das Drehelement (310).

3. Sensor (218) nach Anspruch 1 oder 2, wobei das Drehelement (310) eine innere Öffnung definiert.

4. Sensor (218) nach einem der vorhergehenden Ansprüche, wobei das Verbindungsteil (324) in Gewindeverbindung mit dem Drehelement (310) steht.

5. Sensor (218) nach einem der vorhergehenden Ansprüche wobei sich das Verschiebungsteil (324) entlang einer Drehachse des Drehelements (310) verschiebt.

6. Sensor (218) nach einem der vorhergehenden Ansprüche, wobei der Meßwandler (323, 704) aus einer Gruppe ausgewählt wird, die einen LVDT, einen DVRT®, ein Potentiometer, einen induktiven Meßwandler, einen kapazitiven Meßwandler, einen Hall-Effekt-Meßwandler, einen LED-Meßwandler und einen laserbasierten Meßwandler umfaßt.

7. Sensor (218) nach Anspruch 4 ferner mit einem Befestigungselement (302), das feststehend in Bezug auf das zweite Element (214) angeordnet ist, wobei das Drehelement (310) drehbar an dem Befestigungselement (302) angeordnet ist.

8. Sensor (218) nach einem der vorhergehenden Ansprüche, der ferner eine Antidrehkraft aufweist, die gegen das Verschiebungsteil (324) gerichtet ist.

9. Sensor nach einem der vorhergehenden Ansprüche, wobei sich das Verschiebungsteil (324) auf die Drehung des Drehelements (310) linear verschiebt.

10. Sensor (218) nach einem der vorhergehenden Ansprüche, wobei das erste Element (212) ein Kolben ist und das zweite Element (214) ein Zylinder ist, wobei der Kolben derart angeordnet ist, daß er im Zylinder verschiebbar ist.

11. Sensor (218) nach Anspruch 10, wobei der Sensor (218) im Zylinder angeordnet ist.

12. Sensor (218) nach Anspruch 10 oder 11, der ferner eine Hydraulikflüssigkeit im Zylinder aufweist.

13. Sensor (218) nach einem der vorhergehenden Ansprüche, ferner aufweisend eine Spielausgleichskraft, die entlang einer Längsachse des Verschiebungsteils (324) ausgeübt wird.

14. Schweres Gerät, aufweisend einen Sensor nach Anspruch 12.

15. Verfahren zur Erfassung einer Position des ersten Elements (212), das innerhalb eines Zylinders (200) beweglich ist, wobei das Verfahren folgende Schritte aufweist:
Umwandeln einer Linearverschiebung des ersten Elements (212) in eine proportionale Linearverschiebung eines zweiten Elements (324) in einem Umwandlungselement (220), das fest in Bezug zum Zylinder (200) ist, und Bereitstellen eines Meßwandlers,
**dadurch gekennzeichnet, daß**
die Linearverschiebung des ersten Elements (212) über einer flexiblen Verbinder (216), der mit dem ersten Element (212) und dem Umwandlungselement (220) verbunden ist, in eine proportionale Linearverschiebung des zweiten Elements (324) umgewandelt wird;
der Meßwandler (323, 325, 704) im Zylinder (200) angeordnet ist; und
daß das Verfahren ferner den Schritt des Erfassens der Linearverschiebung des zweiten Elements (324) durch den Meßwandler (323, 325, 704) aufweist.

16. Verfahren nach Anspruch 15, wobei der Umwandlungsschritt die Schritte aufweist:
Umwandeln der Linearverschiebung des ersten Elements (212) in eine Winkelverschiebung des Drehelements (310); und
Umwandeln der Winkelverschiebung des Drehelements (310) in eine Linearverschiebung des zweiten Elements (324).

17. Verfahren nach Anspruch 15 oder 16, wobei der Meßwandler (323, 325, 704) aus einer Gruppe ausgewählt wird, die einen LVDT, einen DVRT®, ein Potentiometer, einen induktiven Meßwandler, einen kapazitiven Meßwandler, einen Hall-Effekt-Meßwandler, einen LED-basierenden Meßwandler und einen laserbasierten Meßwandler aufweist.

18. Verfahren nach einem der Ansprüche 15 bis 17, wobei der Meßwandler (323, 325, 704) betreibbar ist, um ein positionsbezogenes Signal bereitzustellen.

19. Verfahren nach einem der Ansprüche 15 bis 18, ferner umfassend das Bereitstellen von hydraulischem Fluid in dem zylinder (200).

20. Sensor nach Anspruch 6, wobei der Meßwandler ein LVDT aufweist.

21. Sensor nach Anspruch 6, wobei der Meßwandler einen Hall-Effekt-Meßwandler aufweist.

22. Sensor nach Anspruch 3, wobei der Meßwandler zumindest teilweise in der inneren Öffnung angeordnet ist.

23. Sensor nach Anspruch 1, aufweisend erste und zweite Elemente (212, 214), wobei
das erste Ende des flexiblen Verbinders (216) mit dem ersten Element (212) verbunden ist;
das Drehelement (310) am zweiten Element (214) befestigt ist;
das Verschiebungsteil (324) in Abhängigkeit von dem Drehelement (310) ist, und wobei eine Verschiebung des ersten Elements (212) eine Verschiebung des Verschiebungsteils (324) bewirkt.

## Revendications

1. Capteur (218) destiné à fournir un signal lié à la position pour un premier élément (212) en relation à un deuxième élément (214), le capteur comprenant :
un raccord flexible (216) ayant une première extrémité attachable au premier élément (212);
un élément rotatif (310) attachable au deuxième élément (214) et couplé à une seconde extrémité du raccord flexible (216); et
un transducteur (323, 704),
**caractérisé en ce que** le capteur comprend en outre un organe de translation (324) coopérant avec l'élément rotatif (310) ; et
**en ce que** le transducteur (323, 704) est disposé pour capter une position de l'organe de translation (324), dans laquelle le transducteur (323, 704) fournit le signal lié à la position.

2. Capteur (218) selon la revendication 1, comprenant en outre un mécanisme de rappel (428) couplé audit élément rotatif (310) pour transmettre une action de rotation sur ledit élément rotatif (310).

3. Capteur (218) selon la revendication 1 ou 2, dans lequel l'élément rotatif (310) définit une ouverture interne.

4. Capteur (218) selon l'une quelconque des revendications précédentes, dans lequel ledit organe de translation (324) est en communication filetée avec ledit élément rotatif (310).

5. Capteur (218) selon l'une quelconque des revendications précédentes, dans lequel ledit organe de translation (324) se déplace le long d'un axe de rotation dudit élément rotatif (310).

6. Capteur (218) selon l'une quelconque des revendications précédentes, dans lequel ledit transducteur (323, 704) est un élément choisi dans le groupe comprenant un LVDT, un DVRT®, un potentiomètre, un transducteur inductif, un transducteur capacitif, un transducteur à effet Hall, un transducteur à diode électroluminescente et un transducteur à base de laser.

7. Capteur (218) selon la revendication 4, comprenant en outre un élément de montage (302) attaché de manière fixe au second élément (214), ledit élément rotatif (310) étant attaché de manière rotative audit élément de montage (302).

8. Capteur (218) selon l'une quelconque des revendications précédentes, comprenant en outre une force anti-rotation exercée sur ledit organe de translation (324).

9. Capteur selon l'une quelconque des revendications précédentes, dans lequel ledit organe de translation (324) se déplace linéairement lors d'une rotation dudit élément rotatif (310).

10. Capteur (218) selon l'une quelconque des revendications précédentes, dans lequel le premier élément (212) est un piston et ledit deuxième élément (214) est un cylindre, ledit piston étant disposé pour se translater dans ledit cylindre.

11. Capteur (218) selon la revendication 10, dans lequel le capteur (218) est situé à l'intérieur du cylindre.

12. Capteur (218) selon la revendication 10 ou 11, comprenant en outre un fluide hydraulique contenu au sein dudit cylindre.

13. Capteur (218) selon l'une quelconque des revendications précédentes, comprenant en outre une force anti-jeu exercée le long d'un axe longitudinal dudit organe de translation (324).

14. Engin comprenant un capteur selon la revendication 12.

15. Procédé destiné à capter une position d'un premier élément (212) déplaçable à l'intérieur d'un cylindre (200), avec les étapes comportant :
dans un élément de conversion (220) en relation fixe avec le cylindre (200), la conversion d'un déplacement linéaire du premier élément (212) en un déplacement linéaire proportionnel d'un deuxième élément (324), et la fourniture d'un transducteur,
**caractérisé en ce que** :
le déplacement linéaire du premier élément (212) est converti en le déplacement linéaire proportionnel du second élément (324) via un raccord flexible (216) raccordé au premier élément (212) et à l'élément de conversion (220) ;
le transducteur (323, 325, 704) est disposé à l'intérieur du cylindre (200) ; et
le procédé comprend en outre l'étape de captage du déplacement linéaire du second élément (324) avec le transducteur (323, 325, 704).

16. Procédé selon la revendication 15, dans lequel ladite étape de conversion comprend les étapes de :
conversion dudit déplacement linéaire du premier élément (212) en un déplacement angulaire d'un élément rotatif (310) ; et
conversion dudit déplacement angulaire dudit élément rotatif (310) en un déplacement linéaire dudit second élément (324).

17. Procédé selon la revendication 15 ou 16, dans lequel ledit transducteur (323, 325, 704) est un élément choisi dans le groupe comprenant un LVDT, un DVRT®, un potentiomètre, un transducteur inductif, un transducteur capacitif, un transducteur à effet Hall, un transducteur à base de diode électroluminescente et un transducteur à base de laser.

18. Procédé selon l'une quelconque des revendications 15 à 17, dans lequel ledit transducteur (323, 325, 704) est opérationnel pour fournir un signal lié à la position.

19. Procédé selon l'une quelconque des revendications 15 à 18, comprenant en outre la dispersion d'un fluide hydraulique à l'intérieur dudit cylindre (200).

20. Capteur selon la revendication 6, dans lequel le transducteur comprend un LVDT.

21. Capteur selon la revendication 6, dans lequel le transducteur comprend un transducteur à effet Hall.

22. Capteur selon la revendication 3, le transducteur étant au moins partiellement disposé à l'intérieur de l'ouverture interne.

23. Capteur selon la revendication 1, le capteur comprenant les premier et second éléments (212, 214), dans lequel :
la première extrémité du raccord flexible (216) est attachée au premier élément (212);
l'élément rotatif (310) est attaché au second élément (214);
l'organe de translation (324) dépend dudit élément rotatif (310) et, dans lequel un déplacement du premier élément (212) entraîne un déplacement dudit organe de translation (324).
